# DEMANDE DE BREVET EUROPEEN

(11) **EP 1 400 278 A1**
(43) Date de publication de la demande: **24.03.2004**
(21) Numéro de dépôt: 02352021.6
(22) Date de dépôt: 23.10.2002
(51) Int. Cl.: B01F 5/04, A01C 23/04, B05B 7/24

(54) **Dispositif melangeur d'un engrais liquide a un ecoulement d'eau destine au particulier**

(30) Priorité: 17.09.2002 FR 0211496
(71) Demandeur: Fabries Amiflor SA, 81501 Lavaur Cedex (FR)
(72) Inventeur: Fabries, Jean-Michel, 81500 Lavaur (FR)
(74) Mandataire: Ravina, Bernard

(57) **Abrégé**

Le dispositif mélangeur d'un engrais liquide à un écoulement d'eau d'irrigation, comprend une tête de mélange (1) pourvue d'une chambre interne de mélange (2) dans laquelle débouchent un canal interne (3) d'amenée d'eau, destiné à être connecté à une source (4) de distribution d'eau sous pression, un canal interne (5a) d'amenée d'engrais liquide connecté par circuit d'alimentation (5) à un réservoir (7), distant, et un canal interne (8) de distribution d'eau additionnée d'engrais liquide pouvant être connecté à un élément de distribution (9). La chambre (2) est organisée en dispositif Venturi afin que l'écoulement d'eau au travers de la chambre (2), depuis le canal d'amenée d'eau (3) vers le canal de distribution (8) engendre un effet d'aspiration de l'engrais liquide dans la chambre (2) pour le mélange de ce dernier à l'écoulement d'eau

## Description

La présente invention est relative à un dispositif d'introduction et de mélange d'un engrais liquide dans un flux d'eau destiné à l'irrigation et à la fertilisation racinaire et foliaire des plantes. Principalement ce dispositif est destiné au particulier. En vue de l'épandage d'une solution aqueuse chargée en fertilisant liquide, il est connu d'introduire la quantité requise d'engrais liquide dans la quantité requise d'eau et d'agiter en vue du mélange. Dans la pratique, la quantité nécessaire d'eau est introduite dans un arrosoir, dans un seau ou dans un appareil de pulvérisation, ensuite l'utilisateur à l'aide du bouchon-doseur équipant le récipient d'engrais liquide, lequel habituellement se présente sous la forme d'une bouteille en matière synthétique, introduit la quantité nécessaire d'engrais liquide. Une telle façon de faire pose de nombreux problèmes. D'une part, elle exige une manipulation d'un liquide relativement toxique et n'écarte pas les risques de contact de ce liquide avec la peau, les muqueuses ou les yeux en cas d'éclaboussures, ce qui peut se révéler dangereux et d'autre part elle n'écarte pas les risques d'erreurs dans le dosage pouvant conduire à des manques d'engrais ou bien à des excès qui peuvent détruire les plantes.

La présente invention a pour objet de pallier les inconvénients précédemment évoqués en mettant en oeuvre un dispositif mélangeur qui assure l'incorporation automatique de l'engrais liquide dans le flux d'eau d'arrosage et qui en assure une répartition uniforme.

À cet effet le dispositif mélangeur selon la présente invention, d'un engrais liquide à un écoulement d'eau d'irrigation, se caractérise essentiellement en ce qu'il comprend une tête de mélange pourvue d'une chambre interne de mélange dans laquelle débouchent un canal interne d'amenée d'eau destiné à être connecté à une source de distribution d'eau sous pression, un canal interne d'amenée d'engrais liquide connecté par un circuit d'alimentation à un réservoir étanche, distant, et un canal interne de distribution d'eau additionnée d'engrais liquide pouvant être connecté à un élément de distribution d'eau, et la dite chambre étant organisée en dispositif Venturi afin que l'écoulement d'eau au travers de la chambre, depuis le canal d'amenée d'eau vers le canal de distribution engendre un effet d'aspiration de l'engrais liquide dans la chambre pour le mélange de ce dernier à l'écoulement d'eau.

On assure ainsi sans manipulation aucune, le mélange intime de l'engrais liquide à une eau en cours de distribution et non plus, comme antérieurement, à une eau d'arrosage à distribuer.

L'effet d'aspiration produit par le Venturi est engendré par l'écoulement de l'eau au travers de la tête de mélange de sorte que lorsque l'écoulement est interrompu, l'effet d'aspiration disparaît de lui-même, ce qui stoppe l'écoulement d'engrais liquide vers la tête de mélange. Pour éviter tout écoulement parasite d'engrais liquide par effet de siphonage après arrêt de l'écoulement d'eau, le niveau d'engrais liquide dans le réservoir est situé à un niveau plus bas que la chambre de mélange.

Pour que l'aspiration d'engrais liquide vers la chambre de mélange ne soit pas contrariée par une dépression trop importante dans le réservoir, le dispositif mélangeur, selon un autre aspect de l'invention, est doté d'un moyen de mise à l'air libre du réservoir d'engrais liquide, ledit moyen étant constitué par un canal en communication avec l'atmosphère et débouchant dans la partie supérieure du réservoir, au-dessus du niveau de liquide, pour maintenir ladite partie supérieure à la pression atmosphérique.

II est possible de supprimer le moyen de mise à l'air libre en utilisant un réservoir constitué par une poche souple, déformable sous l'effet de la pression atmosphérique. Cette poche, en vue de sa protection contre la perforation, pourra être disposée dans une coque de protection non étanche.

Le canal constituant le moyen de mise à l'air libre pourra être pourvu d'un étranglement réglable. Cet étranglement permet d'ajuster le débit du flux d'air entrant dans le réservoir lors de l'aspiration de l'engrais liquide et par voie de conséquence, le débit du flux d'engrais liquide aspiré. On règle ainsi d'une manière particulièrement simple, la concentration d'engrais liquide dans l'eau d'arrosage.

Selon une autre forme de réalisation, pour ajuster la concentration d'engrais liquide dans l'eau d'arrosage, est prévu, sur le circuit d'alimentation en engrais liquide, un moyen de prise d'air réglable en relation de communication d'une part avec l'atmosphère et d'autre part avec ledit circuit, pour permettre l'introduction dans ce dernier d'un flux d'air de dilution dont le débit est ajustable par ledit moyen. Par ajustement de la valeur du débit, il devient possible de régler la valeur du débit d'engrais parvenant à la chambre de mélange et par voie de conséquence la proportion d'engrais liquide dans l'eau d'arrosage.

Préférentiellement le moyen de prise d'air réglable comprend un canal de prise d'air, interne au dispositif, en relation de communication d'une part avec l'atmosphère et d'autre part avec ledit circuit pour permettre dans ce dernier l'introduction du flux d'air de dilution dont le débit est ajustable par un mécanisme de réglage coopérant avec l'embouchure du canal interne sur l'atmosphère.

Selon un autre aspect de l'invention, ce mécanisme de réglage est constitué par une plaquette mobile déplaçable contre et en regard de l'embouchure externe du canal sur l'atmosphère, cette plaquette comportant des perçages traversants calibrés, de différents diamètres, ordonnés du plus grand au plus petit, et destinés chacun à être amené par déplacement de la plaquette, en regard de l'embouchure externe du canal. Tous ces perçages hormis le plus grand présenteront un diamètre de plus faible valeur que celle de l'embouchure du canal de prise d'air sur l'atmosphère. Comme on le conçoit, la taille du perçage détermine la valeur du débit d'air dans le canal et par voie de conséquence le taux de dilution de l'air dans le flux d'engrais liquide et donc la concentration d'engrais liquide dans l'eau d'arrosage.

L'embouchure du canal de prise d'air peut être totalement obturée par la plaquette, dans ce cas de figure, le débit d'engrais est maximal et la concentration d'engrais liquide dans l'eau d'arrosage est également maximale.

II est nécessaire de pouvoir distribuer l'eau d'arrosage sans pour autant mélanger à cette dernière l'engrais liquide et ce sans devoir pour autant retirer le réservoir d'engrais ou le vider de son contenu. À cet effet l'invention, selon un autre de ses aspects prévoit une vanne d'arrêt disposée sur le circuit d'alimentation en engrais liquide, ladite vanne pouvant occuper une position d'obturation dudit circuit et une position de dégagement dudit circuit. Cette disposition peut être utilisée en combinaison avec le moyen de prise d'air réglable mais de préférence, selon une autre forme de réalisation, le diamètre du canal interne de prise d'air est dimensionné en sorte que lorsque son embouchure est totalement dégagée, l'aspiration d'engrais dans le réservoir est nulle ou très faible et n'est pas suffisante pour amener l'engrais liquide à la chambre de mélange du dispositif. Une des positions de la plaquette mobile conduit au dégagement total de l'embouchure du perçage en disposant face à l'embouchure par exemple le perçage de plus grande taille, ce dernier présentant un diamètre égal ou supérieur à celui de ladite embouchure. Selon cette forme de réalisation est évité l'utilisation d'une vanne d'arrêt.

L'élément de distribution d'eau additionnée éventuellement d'engrais liquide peut être un tuyau d'arrosage comportant en extrémité une buse de distribution à fermeture commandée, cette buse de distribution pouvant être celle d'une lance d'arrosage équipant le tuyau. Pour éviter que l'eau d'arrosage ne reflue vers le réservoir d'engrais liquide lorsque la buse est fermée ou bien lorsque les pertes de charges dans l'élément de distribution sont trop importantes, le circuit d'alimentation en engrais liquide est équipé d'un clapet anti-retour interdisant tout reflux de liquide vers le réservoir étanche.

Le dispositif selon l'invention peut être disposé à la sortie d'un robinet d'arrosage et un tuyau d'arrosage mais aussi entre une source de distribution d'eau sous pression et un élément de distribution du genre goutte à goutte. A cette fin le dispositif est équipé d'un séquenceur entre la source de distribution d'eau et le canal d'amenée d'eau et d'un détendeur de pression en sortie du canal de distribution d'eau.

D'autres avantages, buts et caractéristiques de l'invention, apparaîtront à la lecture de la description d'une forme préférée de réalisation, donnée à titre d'exemple non limitatif, en se référant aux dessins annexés en lesquels :

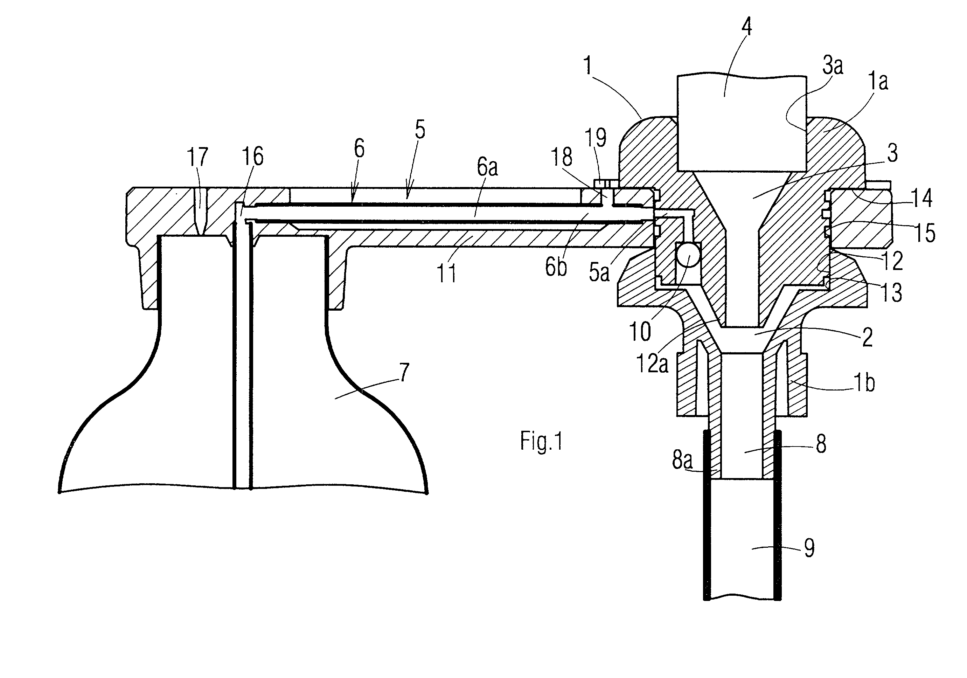

- la figure 1 est une vue en coupe longitudinale du dispositif selon l'invention.

Tel que représenté, le dispositif selon l'invention pour le mélange d'un engrais liquide à un écoulement d'eau d'irrigation, comprend une tête de mélange 1 pourvue d'une chambre interne de mélange 2 dans laquelle débouchent un canal interne 3 d'amenée d'eau, destiné à être connecté à une source 4 de distribution d'eau sous pression, un circuit 5 d'alimentation en engrais liquide connecté à un réservoir 7 d'engrais liquide, distant, et un canal interne 8 de distribution d'eau additionnée d'engrais liquide, pouvant être connecté à un élément de distribution 9, ladite chambre de mélange 2 étant organisée en dispositif Venturi afin que l'écoulement d'eau au travers de la chambre, depuis le canal d'amenée d'eau 3 vers le canal de distribution 8 engendre un effet d'aspiration de l'engrais liquide dans la chambre 2 pour le mélange de ce dernier à l'écoulement d'eau.

Le canal interne d'amenée d'eau 3 présentera avantageusement une bouche taraudée 3a de raccordement à la source de distribution d'eau sous pression 4 cette source de distribution pouvant être un robinet domestique de distribution d'eau sous pression. Le taraudage de la bouche de raccordement 3a recevra en vissage l'embout fileté du robinet de distribution 4. Préférentiellement, la bouche taraudée 3a, le canal 3 d'amenée d'eau, la chambre de mélange 2, et le canal de distribution 8 sont coaxiaux.

Toujours selon la forme préférée de réalisation, la partie terminale du canal interne 8 de distribution du mélange eau et engrais est ménagée coaxialement dans un embout cylindrique fileté 8a de raccordement à l'élément de distribution 9, ledit canal débouchant dans la face terminale plane dudit embout 8a.

L'élément de distribution 9 pourra être constitué par un tuyau d'arrosage comportant en extrémité proximale un raccord taraudé, connu en soit pour être connecté par vissage à l'embout cylindrique fileté 8a de la tête de mélange. Ce tuyau d'arrosage 9 pourra comporter en extrémité distale une buse de distribution calibrée à fermeture commandée et éventuellement à degré d'ouverture réglable, cette buse de distribution connue en soit pouvant être celle d'une lance d'arrosage équipant le tuyau d'arrosage.

Le circuit d'alimentation 5 de la tête de mélange en engrais liquide comprend une conduite 6 en relation de communication avec le volume interne du réservoir et un canal interne 5a pratiqué dans la tête de mélange 2, ledit canal 5a étant en relation de communication d'une part avec la conduite 6 et d'autre part avec la chambre de mélange 2, ce canal débouchant dans ladite chambre. Dans le cas ou le réservoir utilisé est du type rigide, la conduite 6 pénétrera en profondeur dans le réservoir et sous le niveau maximal de liquide et son extrémité distale se situera à proximité du fond de ce dernier selon une position correspondant sensiblement au niveau bas d'engrais liquide dans le réservoir.

Pour éviter tout reflux d'eau vers le réservoir 7, en raison de l'obturation par la buse du tuyau d'arrosage 9 ou en raison de pertes de charges trop importantes, le circuit d'alimentation 5 en engrais est équipé d'un clapet anti-retour 10. Ce clapet anti-retour peut être disposé dans le canal interne 5a d'amenée d'engrais liquide ou bien dans la conduite 6. Ce clapet 10 pourra être disposé aussi entre ledit canal et ladite conduite.

Avantageusement la tête de mélange 1 est solidaire d'un support 11 portant à distance le réservoir 7 d'engrais liquide. Pourront être prévus plusieurs réservoirs.

Préférentiellement le support 11 et la tête 1 sont solidarisés l'un à l'autre avec possibilité de déplacement en rotation l'un par rapport à l'autre et ce préférentiellement selon l'axe géométrique longitudinal de la tête 1. On laisse ainsi au support 11, après raccordement de la tête de mélange 2 à la source d'eau sous pression 4, une latitude de pivotement et d'orientation autour de l'axe longitudinal de la tête, afin éventuellement de pouvoir dégager le réservoir d'un obstacle situé à proximité.

On pourra prévoir aussi que la tête soit liée au support de manière rigide.

Selon la forme préférée de réalisation, la tête 1 est réalisée en deux parties, supérieure 1 a et inférieure 1 b, raccordées de manière étanche l'une à l'autre, les canaux internes 3, 5a d'amenée d'eau et d'engrais liquide étant ménagés dans la partie supérieure tandis que la chambre de mélange 2 et le canal interne de distribution d'eau 8 sont ménagés dans la partie inférieure 1 b.

La partie supérieure 1a de la tête, présente un embout cylindrique 12, fileté sur une portion de sa longueur au moins, et la partie inférieure 1 b de la tête présente un lamage taraudé 13 dans lequel est engagé en vissage la partie fileté de l'embout cylindrique 12 de la partie supérieure de la tête. Le lamage est en communication avec la chambre de mélange 2.

Le canal 5a d'amenée d'engrais liquide débouche dans la face plane terminale de l'embout cylindrique 12 latéralement à un bossage 12a en saillie vers le bas, de forme tronc conique que présente ladite face plane. Le canal d'amenée d'eau 3 débouche dans la face terminale plane de la forme en tronc de cône. La chambre de mélange 2 présente une forme conique. Le bossage en tronc de cône pénètre dans la forme conique sus visée, la chambre de mélange étant alors délimitée par le bossage tronc conique 12a et par la forme conique.

La partie supérieure 1a de la tête est pourvue d'un épaulement cylindrique 14. Par ailleurs le support 11 présente un alésage traversant dans lequel est engagé avec jeu fonctionnel l'embout cylindrique 12 de la partie supérieure 1a et l'épaisseur du support 11 autour de l'alésage traversant est légèrement inférieure à l'intervalle subsistant entre l'épaulement 14 de la partie supérieure 1 a et la face plane autour du lamage 13 de la partie inférieure 1b après engagement total de l'embout fileté 12 dans le lamage taraudé, ledit épaulement et ladite face plane constituant butées au mouvement axial du support le long de l'embout cylindrique.

Le support 11, à distance de la tête, présente un alésage borgne 15, taraudé pour recevoir en vissage, de manière étanche le goulot fileté du récipient 7 d'engrais liquide. Ce support 11 au droit de cet alésage borgne présente un premier perçage traversant 16 dans lequel est engagée de manière étanche la conduite d'alimentation 6 en engrais liquide, ladite conduite pénétrant dans le réservoir 7 et un second perçage traversant 17, constituant moyen de mise à l'air libre, ce perçage pouvant recevoir un dispositif réglable de mise à l'air libre du réservoir d'engrais liquide, ledit dispositif étant constitué préférentiellement par un étranglement réglable. Par ajustement du degré d'ouverture de ce dispositif est ajusté le débit du flux d'air entrant dans le réservoir lors de l'aspiration de l'engrais liquide et par voie de conséquence le débit d'engrais liquide vers la tête de mélange.

La conduite d'alimentation 6 en engrais liquide pourra être équipée d'une vanne d'arrêt pouvant occuper une position d'obturation de la conduite et une position de dégagement de ladite conduite. Cette vanne d'arrêt pourra être montée en fixation sur le support 11 et pourra comporter un corps de vanne avec un alésage traversant dans lequel sera engagé la conduite 6, cette dernière au niveau de l'alésage au moins sera constituée en une matière souple élastiquement déformable. La vanne sera équipée d'un organe de pincement mobile dans un perçage radial débouchant dans l'alésage, cet organe de pincement pouvant être amené en pression sur la conduite pour pincer cette dernière et l'obturer.

En variante pour ajuster la concentration d'engrais liquide dans l'eau d'arrosage, est prévu, sur le circuit 6 d'alimentation en engrais liquide, un moyen de prise d'air réglable, en relation de communication d'une part avec l'atmosphère et d'autre part avec ledit circuit, pour permettre l'introduction dans ce dernier d'un flux d'air de dilution dont le débit est ajustable par ledit moyen. Par réglage de la valeur du débit d'air est réglée la valeur du débit d'engrais parvenant à la chambre de mélange et par voie de conséquence la proportion d'engrais liquide dans l'eau d'arrosage.

Le moyen de prise d'air réglable comprend un canal de prise d'air 18, formé dans le support 11, en relation de communication d'une part avec l'atmosphère et d'autre part avec ledit circuit 6 pour permettre dans ce dernier l'introduction du flux d'air de dilution. Le débit d'air est ajustable par un mécanisme de réglage coopérant avec l'embouchure sur l'atmosphère du canal de prise d'air. L'embouchure sur l'atmosphère, du canal de prise d'air, est formée dans la face supérieure du support 11.

Préférentiellement la conduite 6 est formée par une première section constituée par un tube externe 6a et par une seconde section 6b raccordée à la précédente, formée par un perçage pratiqué dans le support 11, ce perçage étant en communication avec le canal interne 5a par l'intermédiaire d'un joint tournant formé pour partie dans le support 11 et pour autre partie dans la partie supérieure 1 a de la tête 1. Typiquement ce joint tournant est formé par une gorge périmétrique pratiquée dans la partie supérieure 1 a de la tête, dans laquelle gorge débouche le canal interne 5a. Le perçage 6b formant l'une des deux parties de la conduite, est en regard, par son embouchure, avec le perçage traversant du support 11 en regard de la gorge périmétrique. Le canal 18 de prise d'air débouche dans le perçage pratiqué dans le support 11.

Selon une forme préférée de réalisation, le mécanisme de réglage est constitué par une plaquette mobile 19 déplaçable contre et en regard de l'embouchure externe du canal de prise d'air 18 sur l'atmosphère, cette plaquette 19 comportant des perçages traversants calibrés, de différents diamètres, ordonnés du plus grand au plus petit, et destinés chacun à être amené par déplacement de la plaquette 19, en regard de l'embouchure externe du canal 18. Tous ces perçages hormis le plus grand présenteront un diamètre de plus faible valeur que celle du diamètre de l'embouchure du canal de prise d'air 18

Comme on le conçoit, la taille du perçage détermine la valeur du débit d'air dans le canal 18 et par voie de conséquence le taux de dilution de l'air dans le flux d'engrais liquide et donc la concentration d'engrais liquide dans l'eau d'arrosage.

Préférentiellement, la plaquette 19 se présente sous la forme d'une couronne circulaire disposée autour de la partie supérieure 1a de la tête de mélange et maintenue au contact de la face supérieure du support 11. Cette plaquette 19 est déplaçable en rotation autour de la tête 1 et les perçages sont organisés en cercle.

L'embouchure du canal de prise d'air 18 peut être totalement obturée par la plaquette 19, dans ce cas de figure, le débit d'engrais est maximal et la concentration d'engrais liquide dans l'eau d'arrosage est également maximale.

Le diamètre du canal interne de prise d'air 18 est dimensionné en sorte que lorsque l'embouchure du canal est totalement dégagée, l'aspiration d'engrais dans le réservoir 7 est nulle ou très faible et n'est pas suffisante pour amener l'engrais liquide à la chambre de mélange 2 de la tête. Une des positions de la plaquette mobile 19 conduit au dégagement total de l'embouchure du perçage 18 en disposant face à l'embouchure par exemple le perçage de plus grande taille, ce dernier présentant un diamètre égal ou supérieur à celui de ladite embouchure.

Enfin le dispositif selon l'invention dans le cas de son emploi avec un arrosage du type goutte-à-goutte sera équipé d'un séquenceur disposé entre la source de distribution d'eau et le canal d'amenée d'eau et d'un détendeur de pression disposé en sortie du canal de distribution d'eau.

Il va de soi que la présente invention peut recevoir tous aménagements et variantes du domaine des équivalents techniques sans pour autant sortir du cadre du présent brevet.

## Revendications

1. Dispositif mélangeur d'un engrais liquide à un écoulement d'eau d'irrigation, **caractérisé en ce qu'**il comprend une tête de mélange (1) pourvue d'une chambre interne de mélange (2) dans laquelle débouchent un canal interne (3) d'amenée d'eau, destiné à être connecté à une source (4) de distribution d'eau sous pression, un canal interne (5a) d'amenée d'engrais liquide connecté par circuit d'alimentation (5) à un réservoir (7), distant, et un canal interne (8) de distribution d'eau additionnée d'engrais liquide pouvant être connecté à un élément de distribution (9), et la dite chambre (2) étant organisée en dispositif Venturi afin que l'écoulement d'eau au travers de la chambre (2), depuis le canal d'amenée d'eau (3) vers le canal de distribution (8) engendre un effet d'aspiration de l'engrais liquide dans la chambre (2) pour le mélange de ce dernier à l'écoulement d'eau.

2. Dispositif mélangeur selon la revendication 1, **caractérisé en ce qu'**il est doté d'un moyen de mise à l'air libre (17) du réservoir (7) d'engrais liquide.

3. Dispositif mélangeur selon la revendication 2, **caractérisé en ce que** le dispositif de mise à l'air libre est constitué par un étranglement réglable pour ajuster la concentration d'engrais liquide dans l'eau d'arrosage.

4. Dispositif mélangeur selon la revendication 1, **caractérisé en ce qu'**il est doté sur le circuit (5) d'alimentation en engrais liquide, un moyen de prise d'air réglable en relation de communication d'une part avec l'atmosphère et d'autre part avec ledit circuit (5), pour permettre l'introduction dans ce dernier d'un flux d'air de dilution dont le débit est ajustable par ledit moyen.

5. Dispositif mélangeur selon la revendication 4, **caractérisé en ce que** le moyen de prise d'air réglable comprend un canal de prise d'air (18), interne au dispositif, en relation de communication d'une part avec l'atmosphère et d'autre part avec ledit circuit (5) pour permettre dans ce dernier l'introduction du flux d'air de dilution dont le débit est ajustable par un mécanisme de réglage coopérant avec l'embouchure du canal interne sur l'atmosphère.

6. Dispositif mélangeur selon la revendication 5, **caractérisé en ce que** le mécanisme de réglage est constitué par une plaquette mobile (19) déplaçable contre et en regard de l'embouchure externe du canal (18) sur l'atmosphère, cette plaquette (19) comportant des perçages traversants calibrés, de différents diamètres, ordonnés du plus grand au plus petit, et destinés chacun à être amené, par déplacement de la plaquette (19), en regard de l'embouchure externe du canal (18).

7. Dispositif mélangeur selon l'une quelconque des revendications précédentes, **caractérisé par** une vanne d'arrêt disposée sur le circuit (5) d'alimentation en engrais liquide, ladite vanne pouvant occuper une position d'obturation dudit circuit et une position de dégagement de ce dernier.

8. Dispositif mélangeur selon l'une quelconque des revendications précédentes, **caractérisé en ce que** le canal interne (3) d'amenée d'eau présente une bouche taraudée (3a) de raccordement à la source de distribution (4) d'eau sous pression.

9. Dispositif mélangeur selon l'une quelconque des revendications précédentes, **caractérisé en ce que** la partie terminale du canal interne (8) de distribution du mélange eau et engrais est ménagée axialement dans un embout cylindrique fileté (8a) de raccordement à un élément de distribution (9), ledit canal (8) débouchant dans la face terminale plane dudit embout.

10. Dispositif mélangeur selon l'une quelconque des revendications précédentes, **caractérisé en ce que** le circuit (5) d'alimentation en engrais liquide est équipé d'un clapet anti-retour (10) interdisant tout reflux de liquide vers le réservoir (7).

11. Dispositif selon l'une quelconque des revendications précédentes, **caractérisé en ce que** la tête de mélange (1) est réalisée en deux parties, supérieure (1a) et inférieure (1b), raccordées de manière étanche l'une à l'autre, les canaux internes d'amenée d'eau (3) et d'engrais liquide (5a) étant ménagés dans la partie supérieure (1a) tandis que la chambre de mélange (2) et le canal interne (8) de distribution d'eau sont ménagés dans la partie inférieure (1b), la chambre de mélange (2) présentant une forme conique.

12. Dispositif mélangeur selon la revendication 11, **caractérisé en ce que** la partie supérieure (1a) de la tête présente un embout cylindrique (12) fileté sur une portion de longueur au moins et que la partie inférieure de la tête présente un lamage taraudé (13) dans lequel est engagé en vissage la partie fileté de l'embout cylindrique (12) de la partie supérieure de la tête, ledit lamage étant en communication avec la chambre de mélange (2), et que les dits canaux d'amenée d'engrais liquide (5a) (3) et d'amenée d'eau débouchant respectivement dans la face plane terminale de l'embout cylindrique et dans la face plane terminale d'un bossage tronconique (12a) formant saillie vers le bas.

13. Dispositif mélangeur selon la revendication 12, **caractérisé en ce que** la partie supérieure (1a) de la tête dans le prolongement axial de l'embout cylindrique est pourvue d'un épaulement cylindrique (14).

14. Dispositif mélangeur selon l'une quelconque des revendications précédentes, **caractérisé en ce que** la tête (1) est solidaire d'un support (11) portant à distance de ladite tête le réservoir (7) d'engrais liquide.

15. Dispositif mélangeur selon la revendication 14, **caractérisé en ce que** le support (11) et la tête (1) sont solidarisés l'un à l'autre avec possibilité de déplacement en rotation l'un par rapport à l'autre.

16. Dispositif mélangeur selon la revendication 13, **caractérisé en ce que** le support (11) présente un alésage traversant dans lequel est engagé avec jeu fonctionnel l'embout cylindrique (12) de la partie supérieure (1a) et que l'épaisseur du support (11) autour de l'alésage traversant est inférieure à l'intervalle subsistant entre l'épaulement (14) de la partie supérieure et la face plane autour du lamage (13) de la partie inférieure après engagement total de l'embout fileté dans le lamage taraudé, ledit épaulement et ladite face plane constituant butées au mouvement axial du support le long de l'embout cylindrique.

17. Dispositif mélangeur selon l'une quelconque des revendications 14 à 17, **caractérisé en ce que** le circuit (5) d'alimentation en engrais liquide comprend une conduite (6) formée par une partie souple (6a) et par un perçage (6b) pratiqué dans le support 11.

18. Dispositif mélangeur selon la revendication 17, **caractérisé en ce que** le support (11) à distance de la tête (1) présente un alésage borgne (15) taraudé pour recevoir en vissage, de manière étanche le goulot fileté du récipient (7) d'engrais liquide, ledit support (11) présentant un premier perçage traversant dans lequel est engagée de manière étanche la conduite (6) d'alimentation en engrais liquide, ladite conduite pénétrant dans le réservoir et un second perçage traversant constituant moyen de mise à l'air libre.

19. Dispositif mélangeur selon l'une quelconque des revendications précédentes, **caractérisé par** un séquenceur disposé entre la source de distribution d'eau et le canal d'amenée d'eau et par un détendeur de pression disposé en sortie du canal de distribution d'eau.
